# FASCICULE DE BREVET EUROPEEN

(11) **EP 3 280 297 B1**
(45) Date de publication et mention de la délivrance du brevet: **08.05.2019**
(21) Numéro de dépôt: 16733627.0
(22) Date de dépôt: 05.04.2016
(51) Int. Cl.: A47J 19/02

(54) **ENSEMBLE DE CONES DE PRESSAGE EMPILABLES POUR PRESSE-AGRUMES ÉLECTRIQUE**
SATZ VON STAPELBAREN PRESSKEGELN FÜR ELEKTRISCHE ZITRUSPRESSE
SET OF STACKABLE PRESSING CONES FOR ELECTRIC CITRUS PRESS

(30) Priorité: 09.04.2015 FR 1553078
(43) Date de publication de la demande: 14.02.2018
(73) Titulaire: SEB S.A., 69130 Ecully (FR)
(72) Inventeur: WANG, Ronghao, 75014 Paris (FR); PRIETO, Guillaume, 21380 Marsannay le Bois (FR)
(74) Mandataire: Bourrières, Patrice
(86) Numéro de dépôt international: PCT/FR2016/050776
(87) Numéro de publication internationale: WO 2016/162629

(56) Documents cités:
- GB-A- 2 275 415
- US-A- 3 016 075

## Description

La présente invention concerne le domaine technique des presse-agrumes électriques comportant des cônes de pressage rotatifs superposés.

La présente invention concerne plus particulièrement les cônes de pressage rotatifs des appareils du type précité.

Le document GB 2 275 415 divulgue un presse-agrumes électrique comportant un cône de pressage inférieur entraîné en rotation par la base motorisée et au moins un cône de pressage de taille plus importante pouvant être porté par le cône de pressage inférieur. Le cône de pressage inférieur comporte deux ailettes s'étendant à l'extérieur du cône de pressage de taille plus importante lorsque celui-ci est porté par le cône de pressage inférieur. Ces dispositions permettent de mieux adapter le cône de pressage utilisé à la taille de l'agrume à presser. Toutefois ce document reste muet sur le rangement des cônes de pressage lorsque l'appareil comporte plusieurs cônes de pressage de taille plus importante.

Un objet de la présente invention est de proposer un ensemble de cônes de pressage empilables pour presse-agrumes électrique, dans lequel la séparation des cônes de pressage est facilitée.

Un autre objet de la présente invention est de proposer un ensemble de cônes de pressage empilables pour presse-agrumes électrique, qui permette d'optimiser le rangement des cônes de pressage.

Un autre objet de la présente invention est de proposer un ensemble de cônes de pressage empilables pour presse-agrumes électrique, qui permette d'obtenir une bonne extraction de jus pour une gamme étendue de tailles d'agrumes.

Un autre objet de la présente invention est de proposer un ensemble de cônes de pressage empilables pour presse-agrumes électrique, qui permette de favoriser le remuage de la pulpe quel que soit le cône de pressage utilisé.

Un autre objet de la présente invention est de proposer un presse-agrumes électrique dans lequel la séparation des cônes de pressage est facilitée.

Un autre objet de la présente invention est de proposer un presse-agrumes électrique, qui permette d'optimiser le rangement des cônes de pressage.

Un autre objet de la présente invention est de proposer un presse-agrumes électrique, qui permette d'obtenir une bonne extraction de jus pour une gamme étendue de tailles d'agrumes.

Un autre objet de la présente invention est de proposer un presse-agrumes électrique qui permette de favoriser le remuage de la pulpe quel que soit le cône de pressage utilisé.

Ces objets sont atteints avec un ensemble de cônes de pressage empilables pour presse-agrumes électrique comportant une base motorisée, ledit ensemble comportant un premier cône de pressage prévu pour être entraîné en rotation par la base motorisée, et un deuxième cône de pressage pouvant être empilé sur le premier cône de pressage pour être entraîné en rotation par le premier cône de pressage, le premier cône de pressage présentant au moins une première ailette inférieure s'étendant à l'extérieur du deuxième cône de pressage empilé sur le premier cône de pressage, du fait que cet ensemble comporte un troisième cône de pressage pouvant être empilé sur le deuxième cône de pressage pour être entraîné en rotation par le deuxième cône de pressage, que le deuxième cône de pressage comporte au moins une deuxième ailette inférieure s'étendant à l'extérieur du troisième cône de pressage empilé sur le deuxième cône de pressage, et que la ou les premières ailettes inférieures sont décalées angulairement par rapport à la ou les deuxièmes ailettes inférieures. Cette disposition permet de faciliter la séparation des cônes de pressage empilés. Cette disposition permet également d'améliorer le remuage de la pulpe lorsque le deuxième cône de pressage ou le troisième cône de pressage est utilisé dans un réceptacle ajouré. La ou les premières ailettes inférieures permettent de faciliter la séparation du premier cône de pressage et du deuxième cône de pressage. Les trois cônes de pressage empilés permettent une configuration de rangement compacte. Ces dispositions permettent d'obtenir de bonnes performances d'extraction de jus pour différentes tailles d'agrumes. La ou les premières ailettes inférieures permettent le remuage de la pulpe lorsque le premier cône de pressage est utilisé dans un réceptacle ajouré. La ou les premières ailettes inférieures et la ou les deuxièmes ailettes inférieures permettent le remuage de la pulpe lorsque le deuxième cône de pressage ou le troisième cône de pressage est utilisé dans un réceptacle ajouré. La ou les deuxièmes ailettes inférieures permettent de faciliter la séparation du deuxième cône de pressage et du troisième cône de pressage.

Avantageusement alors, la ou au moins l'une des premières ailettes inférieures s'étend à l'extérieur du troisième cône de pressage lorsque le troisième cône de pressage est empilé sur le deuxième cône de pressage et que le deuxième cône de pressage est empilé sur le premier cône de pressage. Cette disposition permet d'améliorer encore le remuage de la pulpe lorsque le troisième cône de pressage est utilisé dans un réceptacle ajouré. La ou les premières ailettes inférieures et la ou les deuxièmes ailettes inférieures permettent le remuage de la pulpe lorsque le deuxième cône de pressage ou le troisième cône de pressage est utilisé. Si désiré cette disposition peut être mise en oeuvre sans que nécessairement le deuxième cône de pressage comporte au moins une deuxième ailette inférieure s'étendant à l'extérieur du troisième cône de pressage empilé sur le deuxième cône de pressage.

Avantageusement encore, le deuxième cône de pressage présente au moins une première échancrure inférieure pour le passage de la ou de l'une des premières ailettes inférieures. Cette disposition permet d'augmenter la hauteur de la surface de pressage du deuxième cône de pressage.

Avantageusement encore, le troisième cône de pressage présente au moins une deuxième échancrure inférieure pour le passage de la ou de l'une des deuxièmes ailettes inférieures. Cette disposition permet d'augmenter la hauteur de la surface de pressage du troisième cône de pressage.

Avantageusement encore, le troisième cône de pressage présente au moins une troisième échancrure inférieure pour le passage de la ou de l'une des premières ailettes inférieures. Cette disposition permet d'utiliser au moins une première ailette inférieure et au moins une deuxième ailette inférieure décalées angulairement, avec une taille plus importante pour la troisième surface de pressage.

Avantageusement encore, le premier cône de pressage présente deux premières ailettes inférieures. Cette disposition permet de faciliter la séparation du premier cône de pressage et du deuxième cône de pressage. Cette disposition permet d'améliorer le remuage de la pulpe lorsque le premier cône de pressage ou le deuxième cône de pressage est utilisé dans un réceptacle ajouré.

Avantageusement alors, les deux premières ailettes inférieures sont agencées de manière opposée. Cette disposition permet de faciliter la séparation du premier cône de pressage et du deuxième cône de pressage.

Avantageusement encore, le deuxième cône de pressage présente deux deuxièmes ailettes inférieures. Cette disposition permet de faciliter la séparation du deuxième cône de pressage et du troisième cône de pressage. Cette disposition permet d'améliorer le remuage de la pulpe lorsque le deuxième cône de pressage est utilisé dans un réceptacle ajouré.

Avantageusement alors, les deux deuxièmes ailettes inférieures sont agencées de manière opposée. Cette disposition permet de faciliter la séparation du deuxième cône de pressage et du troisième cône de pressage.

Avantageusement alors, les deux deuxièmes ailettes inférieures sont agencées à 90° de part et d'autre des deux premières ailettes inférieures. Cette disposition permet de simplifier le montage du deuxième cône de pressage sur le premier cône de pressage.

Ces objets sont atteints également avec un presse-agrumes électrique comportant une base motorisée, un premier cône de pressage prévu pour être entraîné en rotation par la base motorisée, et un deuxième cône de pressage pouvant être empilé sur le premier cône de pressage pour être entraîné en rotation par le premier cône de pressage, du fait que ce presse-agrumes électrique comporte un troisième cône de pressage et que le premier cône de pressage, le deuxième cône de pressage et le troisième cône de pressage appartiennent à un ensemble de cônes de pressage selon l'une au moins des caractéristiques précitées. Si désiré, la base motorisée peut appartenir à un appareil électroménager de préparation culinaire multifonctions, comportant une fonction presse-agrumes.

Avantageusement alors, le presse-agrumes électrique comporte un réceptacle ajouré s'étendant sous le premier cône de pressage et la ou les premières ailettes inférieures s'étendent à l'intérieur du réceptacle ajouré pour presser la pulpe entre la ou les premières ailettes inférieures et le réceptacle ajouré.

Avantageusement alors, la ou les deuxièmes ailettes inférieures s'étendent à l'intérieur du réceptacle ajouré pour presser la pulpe entre la ou les deuxièmes ailettes inférieures et le réceptacle ajouré.

Avantageusement alors, le presse-agrumes électrique comporte un réceptacle à jus et un couvercle prévu pour reposer sur le réceptacle à jus, et le premier cône de pressage, le deuxième cône de pressage et le troisième cône de pressage empilés sont logés à l'intérieur d'une enceinte formée par le réceptacle à jus et le couvercle. Cette disposition permet d'optimiser le rangement des cônes de pressage empilés.

L'invention sera mieux comprise à l'étude d'un exemple de réalisation, pris à titre nullement limitatif, illustré dans les figures annexées, dans lesquelles :
- la figure 1 est une vue en élévation et en coupe d'un exemple de réalisation d'un presse-agrumes électrique comportant un ensemble de cônes de pressage empilables selon l'invention,
- la figure 2 est une vue en perspective et en éclaté du presse-agrumes électrique illustré sur la figure 1,
- la figure 3 est une vue en perspective d'un premier cône de pressage appartenant à l'ensemble de cônes de pressage empilables selon l'invention illustré sur les figures 1 et 2,
- la figure 4 est une vue en perspective d'un deuxième cône de pressage appartenant à l'ensemble de cônes de pressage empilables selon l'invention illustré sur les figures 1 et 2,
- la figure 5 est une vue en perspective d'un troisième cône de pressage appartenant à l'ensemble de cônes de pressage empilables selon l'invention illustré sur les figures 1 et 2,
- la figure 6 est une vue en perspective de dessus du deuxième cône de pressage illustré sur la figure 4 empilé sur le premier cône de pressage illustré sur la figure 3 représenté en place sur le réceptacle à jus et le réceptacle à pulpe du presse-agrumes électrique illustré sur les figures 1 et 2,
- la figure 7 est une vue en perspective de dessus du troisième cône de pressage illustré sur la figure 5 empilé sur le deuxième cône de pressage illustré sur la figure 4, lequel est empilé sur le premier cône de pressage illustré sur la figure 3,
- la figure 8 est une vue en perspective de dessous du troisième cône de pressage illustré sur la figure 5 empilé sur le deuxième cône de pressage illustré sur la figure 4, lequel est empilé sur le premier cône de pressage illustré sur la figure 3.

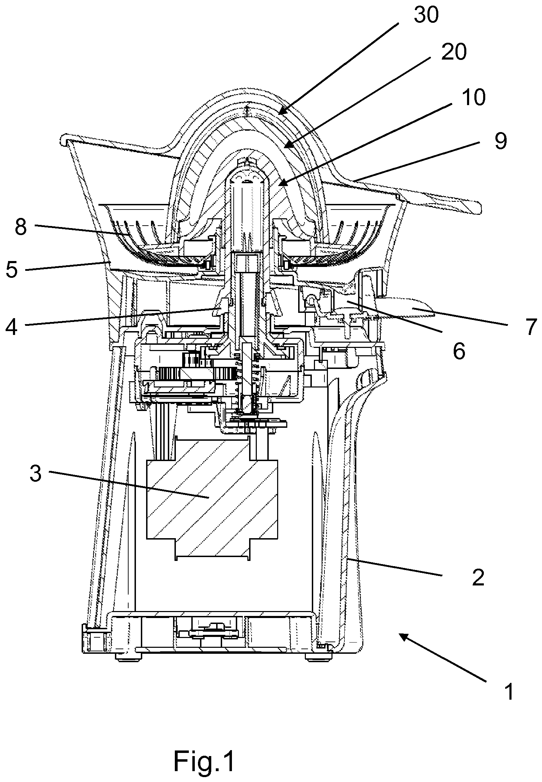

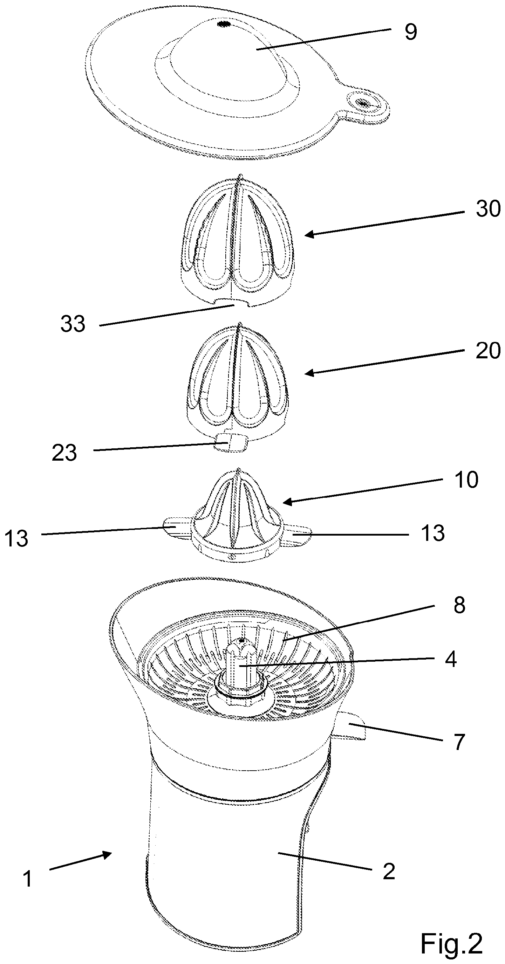

L'appareil illustré sur les figures 1 et 2 est un presse-agrumes électrique 1 comportant une base motorisée 2, un premier cône de pressage 10 prévu pour être entraîné en rotation par la base motorisée 2, un deuxième cône de pressage 20 pouvant être empilé sur le premier cône de pressage 10 pour être entraîné en rotation par le premier cône de pressage 10, et un troisième cône de pressage 30 pouvant être empilé sur le deuxième cône de pressage 20 pour être entraîné en rotation par le deuxième cône de pressage 20.

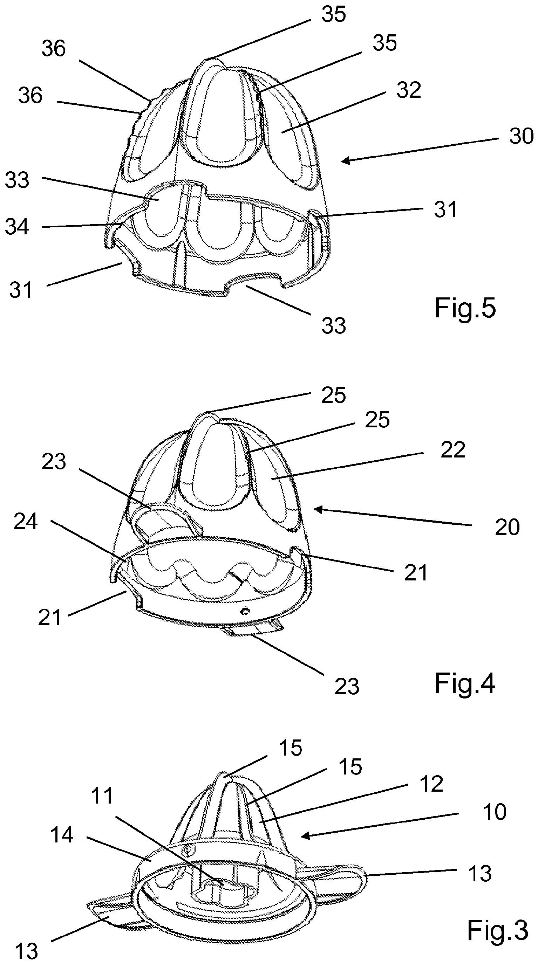

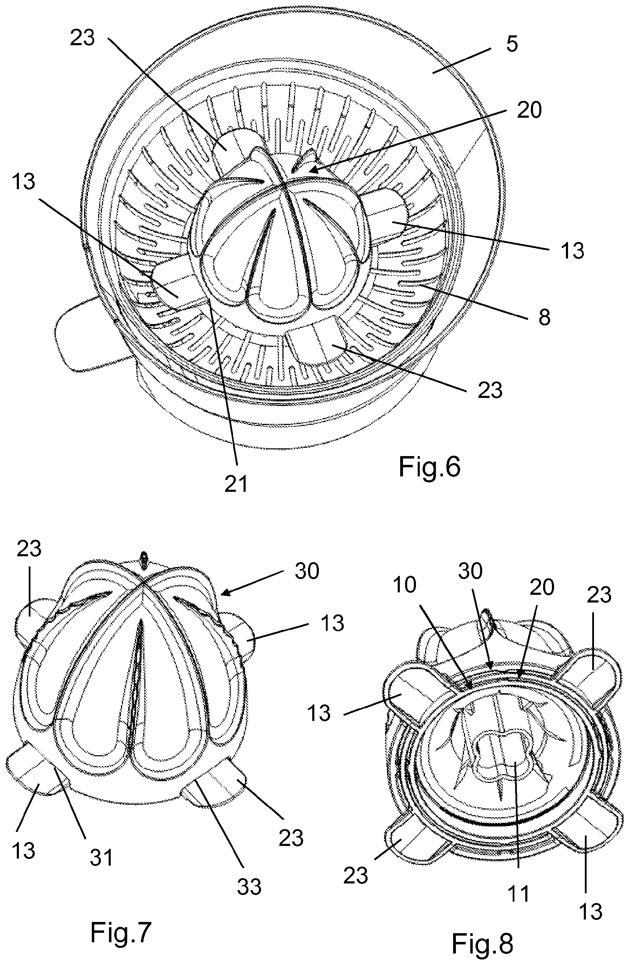

Tel que visible sur la figure 1, le premier cône de pressage 10 présente un organe d'entraînement inférieur 11. Dans l'exemple de réalisation illustré sur les figures, l'organe d'entraînement inférieur 11 présente quatre lobes, tel que mieux visible sur les figures 3 et 8. A titre de variantes d'autres géométries peuvent être envisagées pour l'organe d'entraînement inférieur, notamment une géométrie à trois lobes ou à six pans.

La base motorisée 2 loge un moteur électrique 3 relié à un organe entraîneur 4 prévu pour entraîner en rotation l'organe d'entraînement inférieur 11 du premier cône de pressage 10. La base motorisée 2 peut présenter si désiré un dispositif de commande autorisant le fonctionnement du moteur électrique 3 lorsqu'une pression est exercée sur l'organe entraîneur 4 en direction de la base motorisée 2, tel qu'utilisé de manière classique sur les presse-agrumes électriques.

Le presse-agrumes électrique 1 comporte un réceptacle à jus 5. La base motorisée 2 porte le réceptacle à jus 5. Le réceptacle à jus présente une cheminée prévue pour le passage de l'organe entraîneur 4. Dans l'exemple de réalisation illustré sur les figures 1 et 2, le réceptacle à jus 5 est amovible par rapport à la base motorisée 2. Le réceptacle à jus 5 peut comporter si désiré une sortie à jus 6 équipée d'un clapet anti-goutte 7.

Le presse-agrumes électrique 1 comporte un réceptacle ajouré 8 amovible pouvant être intercalé entre le réceptacle à jus 5 et le premier cône de pressage 10, pour retenir la pulpe et/ou les pépins. Le réceptacle ajouré 8 s'étend sous le premier cône de pressage 10. Le réceptacle ajouré 8 comporte également une cheminée prévue pour le passage de l'organe entraîneur 4.

Le presse-agrumes électrique 1 comporte un couvercle 9 prévu pour reposer sur le réceptacle à jus 5. Tel que visible sur la figure 1, le premier cône de pressage 10, le deuxième cône de pressage 20 et le troisième cône de pressage 30 empilés sont logés à l'intérieur d'une enceinte formée par le réceptacle à jus 5 et le couvercle 9.

Le premier cône de pressage 10, le deuxième cône de pressage 20, le troisième cône de pressage 30 forment un ensemble de cônes de pressage empilables pour le presse-agrumes électrique 1 comportant la base motorisée 2.

Tel que mieux visible sur la figure 3, le premier cône de pressage 10 comporte une première surface de pressage 12 reliée à l'organe d'entraînement inférieur 11. Le premier cône de pressage 10 présente deux premières ailettes inférieures 13 s'étendant radialement vers l'extérieur à partir d'une première bordure inférieure 14 de la première surface de pressage 12. Les deux premières ailettes inférieures 13 sont agencées de manière opposée par rapport à la première surface de pressage 12.

La première surface de pressage 12 est prévue par exemple pour le pressage des agrumes de petite taille tels que les citrons. La première surface de pressage 12 présente une série de premières nervures 15. Dans l'exemple de réalisation illustré sur la figure 3, les premières nervures 15 sont agencées radialement.

Tel que mieux visible sur la figure 4, le deuxième cône de pressage 20 comporte une deuxième surface de pressage 22. Le deuxième cône de pressage 20 présente deux deuxièmes ailettes inférieures 23 s'étendant radialement vers l'extérieur à partir d'une deuxième bordure inférieure 24 de la deuxième surface de pressage 22. Les deux deuxièmes ailettes inférieures 23 sont agencées de manière opposée par rapport à la deuxième surface de pressage 22.

Le deuxième cône de pressage 20 présente deux premières échancrures inférieures 21 pour le passage de chacune des premières ailettes inférieures 13. Les deux premières échancrures inférieures 21 sont ménagées dans la deuxième bordure inférieure 24 de la deuxième surface de pressage 22. Les deux premières échancrures inférieures 21 sont agencées de manière opposée. Les deux deuxièmes ailettes inférieures 23 sont décalées angulairement par rapport deux premières échancrures inférieures 21. Plus particulièrement, les deux deuxièmes ailettes inférieures 23 sont agencées à 90° de part et d'autre des deux premières échancrures inférieures 21.

La deuxième surface de pressage 22 est prévue par exemple pour le pressage des agrumes de moyenne taille tels que les oranges. La deuxième surface de pressage 22 présente une série de deuxièmes nervures 25. Dans l'exemple de réalisation illustré sur la figure 4, les deuxièmes nervures 25 sont agencées radialement.

Tel que mieux visible sur la figure 5, le troisième cône de pressage 30 comporte une troisième surface de pressage 32. Le troisième cône de pressage 30 présente deux deuxièmes échancrures inférieures 33 pour le passage de chacune des deuxièmes ailettes inférieures 23. Les deux deuxièmes échancrures inférieures 33 sont ménagées dans une troisième bordure inférieure 34 de la troisième surface de pressage 32. Les deux deuxièmes échancrures inférieures 33 sont agencées de manière opposée.

Le troisième cône de pressage 30 présente deux troisièmes échancrures inférieures 31 pour le passage de chacune des premières ailettes inférieures 13. Les deux troisièmes échancrures inférieures 31 sont ménagées dans la troisième bordure inférieure 34 de la troisième surface de pressage 32. Les troisièmes échancrures inférieures 31 sont agencées de manière opposée. Les deux deuxièmes échancrures inférieures 33 sont décalées angulairement par rapport aux deux troisièmes échancrures inférieures 31. Plus particulièrement, les deux deuxièmes échancrures inférieures 33 sont agencées à 90° de part et d'autre des deux troisièmes échancrures inférieures 31.

La troisième surface de pressage 32 est prévue par exemple pour le pressage des agrumes de taille plus importante tels que les pamplemousses. La troisième surface de pressage 32 présente une série de troisièmes nervures 35. Dans l'exemple de réalisation illustré sur la figure 5, les troisièmes nervures 35 sont agencées radialement. De plus, pour augmenter le rendement d'extraction, au moins certaines des troisièmes nervures 35 présentent des dents 36.

Tel que visible sur les figures 1 et 6, le deuxième cône de pressage 20 peut être empilé sur le premier cône de pressage 10 pour être entraîné en rotation par le premier cône de pressage 10.

La figure 6 illustre le deuxième cône de pressage 20 empilé sur le premier cône de pressage 10 en place dans le réceptacle ajouré 8 disposé dans le réceptacle à jus 5. Les premières ailettes inférieures 13 du premier cône de pressage 10 s'étendent à l'extérieur du deuxième cône de pressage 20 empilé sur le premier cône de pressage 10. Les premières ailettes inférieures 13 du premier cône de pressage 10 s'étendent à l'intérieur du réceptacle ajouré 8, pour presser la pulpe entre les premières ailettes inférieures 13 et le réceptacle ajouré 8. Les deuxièmes ailettes inférieures 23 du deuxième cône de pressage 20 s'étendent à l'intérieur du réceptacle ajouré 8, pour presser la pulpe entre les deuxièmes ailettes inférieures 23 et le réceptacle ajouré 8.

Tel que visible sur les figures 1, 7 et 8, le troisième cône de pressage 30 peut être empilé sur le deuxième cône de pressage 20 pour être entraîné en rotation par le deuxième cône de pressage 20.

Tel que visible sur les figures 7 et 8 illustrant le premier cône de pressage 10, le deuxième cône de pressage 20 et le troisième cône de pressage 30 empilés, les premières ailettes inférieures 13 du premier cône de pressage 10 s'étendent à l'extérieur du troisième cône de pressage 30 empilé sur le deuxième cône de pressage 20 et le premier cône de pressage 10. Les deuxièmes ailettes inférieures 23 du deuxième cône de pressage 20 s'étendent à l'extérieur du troisième cône de pressage 30 empilé sur le deuxième cône de pressage 20.

Le presse-agrumes électrique 1 comportant l'ensemble de cônes de pressage empilables selon l'invention s'utilise et fonctionne de la manière suivante.

En fonction du calibre de l'agrume à presser, l'utilisateur place le premier cône de pressage 10 sur l'organe entraîneur 4, si désiré le deuxième cône de pressage 20 sur le premier cône de pressage 10 et si désiré encore le troisième cône de pressage 30 sur le deuxième cône de pressage 20. Les premières ailettes inférieures 13 et les deuxièmes ailettes inférieures 23 permettent de presser dans le réceptacle ajouré 8 la pulpe extraite des agrumes, pour obtenir davantage de jus. Les premières ailettes inférieures 13 permettent de rigidifier le premier cône de pressage 10. Les deuxièmes ailettes inférieures 23 permettent de rigidifier le deuxième cône de pressage 20. Les premières ailettes inférieures 13 et les deuxièmes ailettes inférieures 23 permettent également de faciliter la séparation du troisième cône de pressage 30 avec le deuxième cône de pressage 20, ainsi que la séparation du deuxième cône de pressage 20 avec le premier cône de pressage 10.

A titre de variante, le premier cône de pressage 10 peut présenter au moins une première ailette inférieure 13 s'étendant à l'extérieur du deuxième cône de pressage 20 empilé sur le premier cône de pressage 10.

A titre de variante alors, le deuxième cône de pressage 20 peut présenter au moins une première échancrure inférieure 21 pour le passage de la ou de l'une des premières ailettes inférieures 13.

A titre de variante, la ou au moins l'une des premières ailettes inférieures 13 peut s'étendre à l'extérieur du troisième cône de pressage 30 lorsque le troisième cône de pressage 30 est empilé sur le deuxième cône de pressage 20 et que le deuxième cône de pressage 20 est empilé sur le premier cône de pressage 10.

A titre de variante, le deuxième cône de pressage 20 peut comporter au moins une deuxième ailette inférieure 23 s'étendant à l'extérieur du troisième cône de pressage 30 empilé sur le deuxième cône de pressage 20.

A titre de variante alors, le troisième cône de pressage 30 peut présenter au moins une deuxième échancrure inférieure 33 pour le passage de la ou de l'une des deuxièmes ailettes inférieures 23.

A titre de variante encore, la ou les premières ailettes inférieures 13 peuvent être décalées angulairement par rapport à la ou les deuxièmes ailettes inférieures 23.

A titre de variante, le troisième cône de pressage 30 peut présenter au moins une troisième échancrure inférieure 31 pour le passage de la ou de l'une des premières ailettes inférieures 13.

La présente invention n'est nullement limitée à l'exemple de réalisation décrit et à ses variantes, mais englobe de nombreuses modifications dans le cadre des revendications.

## Revendications

1. Ensemble de cônes de pressage empilables pour presse-agrumes électrique (1) comportant une base motorisée (2), ledit ensemble comportant un premier cône de pressage (10) prévu pour être entraîné en rotation par la base motorisée (2), et un deuxième cône de pressage (20) pouvant être empilé sur le premier cône de pressage (10) pour être entraîné en rotation par le premier cône de pressage (10), le premier cône de pressage (10) présentant au moins une première ailette inférieure (13) s'étendant à l'extérieur du deuxième cône de pressage (20) empilé sur le premier cône de pressage (10), **caractérisé en ce qu'**il comporte un troisième cône de pressage (30) pouvant être empilé sur le deuxième cône de pressage (20) pour être entraîné en rotation par le deuxième cône de pressage (20), **en ce que** le deuxième cône de pressage (20) comporte au moins une deuxième ailette inférieure (23) s'étendant à l'extérieur du troisième cône de pressage (30) empilé sur le deuxième cône de pressage (20), et **en ce que** la ou les premières ailettes inférieures (13) sont décalées angulairement par rapport à la ou les deuxièmes ailettes inférieures (23).

2. Ensemble de cônes de pressage empilables selon la revendication 1, **caractérisé en ce que** la ou au moins l'une des premières ailettes inférieures (13) s'étend à l'extérieur du troisième cône de pressage (30) lorsque le troisième cône de pressage (30) est empilé sur le deuxième cône de pressage (20) et que le deuxième cône de pressage (20) est empilé sur le premier cône de pressage (10).

3. Ensemble de cônes de pressage empilables selon l'une des revendications 1 ou 2, **caractérisé en ce que** le deuxième cône de pressage (20) présente au moins une première échancrure inférieure (21) pour le passage de la ou de l'une des premières ailettes inférieures (13).

4. Ensemble de cônes de pressage empilables selon l'une des revendications 1 à 3, **caractérisé en ce que** le troisième cône de pressage (30) présente au moins une deuxième échancrure inférieure (33) pour le passage de la ou de l'une des deuxièmes ailettes inférieures (23).

5. Ensemble de cônes de pressage empilables selon l'une des revendications 1 à 4, **caractérisé en ce que** le troisième cône de pressage (30) présente au moins une troisième échancrure inférieure (31) pour le passage de la ou de l'une des premières ailettes inférieures (13).

6. Ensemble de cônes de pressage empilables selon l'une des revendications 1 à 5, **caractérisé en ce que** le premier cône de pressage (10) présente deux premières ailettes inférieures (13).

7. Ensemble de cônes de pressage empilables selon la revendication 6, **caractérisé en ce que** les deux premières ailettes inférieures (13) sont agencées de manière opposée.

8. Ensemble de cônes de pressage empilables selon l'une des revendications 1 à 7, **caractérisé en ce que** le deuxième cône de pressage (20) présente deux deuxièmes ailettes inférieures (23).

9. Ensemble de cônes de pressage empilables selon la revendication 8, **caractérisé en ce que** les deux deuxièmes ailettes inférieures (23) sont agencées de manière opposée.

10. Ensemble de cônes de pressage empilables selon les revendications 7 et 9, **caractérisé en ce que** les deux deuxièmes ailettes inférieures (23) sont agencées à 90° de part et d'autre des deux premières ailettes inférieures (13).

11. Presse-agrumes électrique (1) comportant une base motorisée (2), un premier cône de pressage (10) prévu pour être entraîné en rotation par la base motorisée (2), et un deuxième cône de pressage (20) pouvant être empilé sur le premier cône de pressage (10) pour être entraîné en rotation par le premier cône de pressage (10), **caractérisé en ce qu'**il comporte un troisième cône de pressage (30) et **en ce que** le premier cône de pressage (10), le deuxième cône de pressage (20) et le troisième cône de pressage (30) appartiennent à un ensemble de cônes de pressage selon l'une des revendications 1 à 10.

12. Presse-agrumes électrique (1) selon la revendication 11, **caractérisé en ce qu'**il comporte un réceptacle ajouré (8) s'étendant sous le premier cône de pressage (10) et **en ce que** la ou les premières ailettes inférieures (13) s'étendent à l'intérieur du réceptacle ajouré (8) pour presser la pulpe entre la ou les premières ailettes inférieures (13) et le réceptacle ajouré (8).

13. Presse-agrumes électrique (1) selon la revendication 12, **caractérisé en ce que** la ou les deuxièmes ailettes inférieures (23) s'étendent à l'intérieur du réceptacle ajouré (8) pour presser la pulpe entre la ou les deuxièmes ailettes inférieures (23) et le réceptacle ajouré (8).

14. Presse-agrumes électrique (1) selon l'une des revendications 11 à 13, **caractérisé en ce qu'**il comporte un réceptacle à jus (5) et un couvercle (9) prévu pour reposer sur le réceptacle à jus (5), et **en ce que** le premier cône de pressage (10), le deuxième cône de pressage (20) et le troisième cône de pressage (30) empilés sont logés à l'intérieur d'une enceinte formée par le réceptacle à jus (5) et le couvercle (9).

## Patentansprüche

1. Anordnung stapelbarer Presskegel für eine elektrische Zitrusfruchtpresse (1), die eine motorisierte Basis (2) aufweist, wobei die Anordnung einen ersten Presskegel (10), der dazu vorgesehen ist, von der motorisierten Basis (2) in Rotation versetzt zu werden, und einen zweiten Presskegel (20) aufweist, der auf den ersten Presskegel (10) gestapelt werden kann, um durch den ersten Presskegel (10) in Rotation versetzt zu werden, wobei der erste Presskegel (10) mindestens eine erste untere Rippe (13) vorweist, die sich außerhalb des zweiten Presskegels (20) erstreckt, der auf dem ersten Presskegel (10) gestapelt ist, **dadurch gekennzeichnet, dass** sie einen dritten Presskegel (30) aufweist, der auf dem zweiten Presskegel (20) gestapelt werden kann, um durch den zweiten Presskegel (20) in Rotation versetzt zu werden, dass der zweite Presskegel (20) mindestens eine zweite untere Rippe (23) aufweist, die sich außerhalb des dritten Presskegels (30) erstreckt, der auf dem zweiten Presskegel (20) gestapelt ist, und dass die erste untere Rippe oder die ersten unteren Rippen (13) gegenüber der zweiten unteren Rippe oder den zweiten unteren Rippen (23) winkelversetzt sind.

2. Anordnung stapelbarer Presskegel nach Anspruch 1, **dadurch gekennzeichnet, dass** die erste untere Rippe oder mindestens eine der ersten unteren Rippen (13) sich außerhalb des dritten Presskegels (30) erstreckt, wenn der dritte Presskegel (30) auf dem zweiten Presskegel (20) gestapelt ist, und dass der zweite Presskegel (20) auf dem ersten Presskegel (10) gestapelt ist.

3. Anordnung stapelbarer Presskegel nach einem der Ansprüche 1 oder 2, **dadurch gekennzeichnet, dass** der zweite Presskegel (20) mindestens eine erste untere Aussparung (21) für den Durchgang von der einen ersten unteren Rippe oder der einen der ersten unteren Rippen (13) vorweist.

4. Anordnung stapelbarer Presskegel nach einem der Ansprüche 1 bis 3, **dadurch gekennzeichnet, dass** der dritte Presskegel (30) mindestens eine zweite untere Aussparung (33) für den Durchgang von der einen zweiten unteren Rippe oder der einen der zweiten unteren Rippen (23) vorweist.

5. Anordnung stapelbarer Presskegel nach einem der Ansprüche 1 bis 4, **dadurch gekennzeichnet, dass** der dritte Presskegel (30) mindestens eine dritte untere Aussparung (31) für den Durchgang von der einen ersten unteren Rippe oder der einen der ersten unteren Rippen (13) vorweist.

6. Anordnung stapelbarer Presskegel nach einem der Ansprüche 1 bis 5, **dadurch gekennzeichnet, dass** der erste Presskegel (10) zwei untere Rippen (13) vorweist.

7. Anordnung stapelbarer Presskegel nach Anspruch 6, **dadurch gekennzeichnet, dass** die ersten beiden unteren Rippen (13) entgegengesetzt angeordnet sind.

8. Anordnung stapelbarer Presskegel nach einem der Ansprüche 1 bis 7, **dadurch gekennzeichnet, dass** der zweite Presskegel (20) zwei untere zweite Rippen (23) vorweist.

9. Anordnung stapelbarer Presskegel nach Anspruch 8, **dadurch gekennzeichnet, dass** die beiden unteren zweiten Rippen (23) entgegengesetzt angeordnet sind.

10. Anordnung stapelbarer Presskegel nach den Ansprüchen 7 und 9, **dadurch gekennzeichnet, dass** die beiden unteren zweiten Rippen (23) bei 90° auf beiden Seiten der beiden unteren ersten Rippen (13) angeordnet sind.

11. Elektrische Zitrusfruchtpresse (1), aufweisend eine motorisierte Basis (2), einen ersten Presskegel (10), der dazu vorgesehen ist, von der motorisierten Basis (2) in Rotation versetzt zu werden, und einem zweiten Presskegel (20), der auf den ersten Presskegel (10) gestapelt werden kann, um durch den ersten Presskegel (10) in Rotation versetzt zu werden, **dadurch gekennzeichnet, dass** sie einen dritten Presskegel (30) aufweist, und dass der erste Presskegel (10) der zweite Presskegel (20) und der dritte Presskegel (30) zu einer Anordnung von Presskegeln nach einem der Ansprüche 1 bis 10 gehören.

12. Elektrische Zitrusfruchtpresse (1) nach Anspruch 11, **dadurch gekennzeichnet, dass** sie einen perforierten Behälter (8) aufweist, der sich unter dem ersten Presskegel (10) erstreckt, und dass die erste untere Rippe oder ersten unteren Rippen (13) sich im Inneren des perforierten Behälters (8) erstreckt bzw. erstrecken, um den Pulp zwischen der ersten unteren Rippe oder den ersten unteren Rippen (13) und dem perforierten Behälter (8) zu pressen.

13. Elektrische Zitrusfruchtpresse (1) nach Anspruch 12, **dadurch gekennzeichnet, dass** die zweite untere Rippe oder zweiten unteren Rippen (23) sich im Inneren des perforierten Behälters (8) erstreckt bzw. erstrecken, um den Pulp zwischen der unteren Rippen oder den unteren Rippen (23) und dem perforierten Behälter (8) zu pressen.

14. Elektrische Zitrusfruchtpresse (1) nach einem der Ansprüche 11 bis 13, **dadurch gekennzeichnet, dass** sie einen Saftbehälter (5) und einen Deckel (9) aufweist, der dazu vorgesehen ist, auf dem Saftbehälter (5) zu ruhen , und dass der erste Presskegel (10), der zweite Presskegel (20) und der dritte Presskegel (30), die aufgestapelt sind, im Inneren eines durch den Saftbehälter (5) und den Deckel (9) gebildeten Gehäuses aufgenommen sind.

## Claims

1. Set of stackable pressing cones for an electric citrus press (1) comprising a motorised base (2), said set comprising a first pressing cone (10) provided to be driven in rotation by the motorised base (2), and a second pressing cone (20) that can be stacked on the first pressing cone (10) in order to be driven in rotation by the first pressing cone (10), the first pressing cone (10) having at least one first lower fin (13) extending to the outside of the second pressing cone (20) stacked on the first pressing cone (10), **characterised in that** it comprises a third pressing cone (30) that can be stacked on the second pressing cone (20) in order to be driven in rotation by the second pressing cone (20), **in that** the second pressing cone (20) comprises at least one second lower fin (23) extending to the outside of the third pressing cone (30) stacked on the second pressing cone (20), and **in that** the first lower fin or fins (13) are angularly offset with respect to the second lower fin or fins (23).

2. Set of stackable pressing cones according to claim 1, **characterised in that** the or at least one of the first lower fins (13) extends to the outside of the third pressing cone (30) when the third pressing cone (30) is stacked on the second pressing cone (20) and when the second pressing cone (20) is stacked on the first pressing cone (10).

3. Set of stackable pressing cones according to any of the claims 1 or 2, **characterised in that** the second pressing cone (20) has at least one first lower notch (21) for the passage of the or of one of the first lower fins (13).

4. Set of stackable pressing cones according to any of the claims 1 to 3, **characterised in that** the third pressing cone (30) has at least one second notch (33) for the passage of the or of one of the second lower fins (23).

5. Set of stackable pressing cones according to any of the claims 1 to 4, **characterised in that** the third pressing cone (30) has at least one third lower notch (31) for the passage of the or of one of the first lower fins (13).

6. Set of stackable pressing cones according to any of the claims 1 to 5, **characterised in that** the first pressing cone (10) has two lower fins (13).

7. Set of stackable pressing cones according to claim 6, **characterised in that** the two first lower fins (13) are arranged opposite.

8. Set of stackable pressing cones according to any of the claims 1 to 7, **characterised in that** the second pressing cone (20) has two second lower fins (23).

9. Set of stackable pressing cones according to claim 8, **characterised in that** the two second lower fins (23) are arranged opposite.

10. Set of stackable pressing cones according to the claims 7 and 9, **characterised in that** the two second lower fins (23) are arranged at 90° on either side of the two first lower fins (13).

11. Electric citrus press (1) comprising a motorised base (2), a first pressing cone (10) provided to be driven in rotation by the motorised base (2), and a second pressing cone (20) that can be stacked on the first pressing cone (10) in order to be driven in rotation by the first pressing cone (10), **characterised in that** it comprises a third pressing cone (30) and **in that** the first pressing cone (10), the second pressing cone (20) and the third pressing cone (30) belong to a set of pressing cones according to any of the claims 1 to 10.

12. Electric citrus press (1) according to claim 11, **characterised in that** it comprises a perforated receptacle (8) extending under the first pressing cone (10) and **in that** the first lower fin or fins (13) extend to the inside of the perforated receptacle (8) in order to press the pulp between the first lower fin or fins (13) and the perforated receptacle (8).

13. Electric citrus press (1) according to claim 12, **characterised in that** the second lower fin or fins (23) extend to the inside of the perforated receptacle (8) in order to press the pulp between the second lower fin or fins (23) and the perforated receptacle (8).

14. Electric citrus press (1) according to any of the claims 11 to 13, **characterised in that** it comprises a juice receptacle (5) and a cover (9) provided to rest on the juice receptacle (5), and **in that** the first pressing cone (10), the second pressing cone (20) and the third pressing cone (30) are stacked and housed inside an enclosure formed by the juice receptacle (5) and the cover (9).
